# EUROPEAN PATENT APPLICATION

(11) **EP 2 214 114 A1**
(43) Date of publication of application: **04.08.2010**
(21) Application number: 09180991.3
(22) Date of filing: 30.12.2009
(51) Int. Cl.: G06F 21/00, G06F 17/30

(54) **Extending secure management of file attribute information to virtual hard disks**

(30) Priority: 29.01.2009 US 362452
(71) Applicant: SYMANTEC CORPORATION, Mountain View, CA 94043 (US)
(72) Inventor: Sobel, William E., Jamul CA 91935 (US); Mccorcendale, Bruce, Manhattan Beach CA 90026 (US)
(74) Representative: Zinkler, Franz

(57) **Abstract**

File attribute information is shared between processes running on a virtual machine and processes accessing a virtual hard disk from a host level. When a host level process accesses files on a virtual hard disk, that process updates the relevant file attribute information, and stores the updated file attribute information on the virtual hard disk. When a virtual machine level process subsequently accesses files on the virtual hard disk, that process reads the updated file attribute information, and omits unnecessary operations. When a virtual machine level process accesses files on the virtual hard disk and updates the corresponding file attribute information, that process communicates the updated file attribute information to the host. When a host level process subsequently accesses files on the virtual hard disk, the host level process reads the updated file attribute information.

## Description

### Technical Field

This invention pertains generally to file attribute information, and more specifically to extending secure management of file attribute information to virtual hard disks.

### Background

Patent application Serial Number 12/130,616, titled "Methods and Systems for Securely Managing File-attribute Information for Files in a File System," filed on May 30, 2008, and having the same assignee, is herein incorporated by reference in its entirety ("The File Attribute Information Application"). The File Attribute Information Application describes secure management and safe persistence of file attribute information. As described therein, file attribute information can be stored, and updated (e.g., modified and/or reset) as appropriate when files are processed and/or modified. File attribute information can indicate information, for every file in a file system, such as when a given file was last scanned for malware, which version of malware definitions was used for the last scan, the results of the last scan, when the file was last modified, etc. This allows, for example, an anti-malware scanning engine to quickly query such file attribute information concerning a given file and determine whether that file can be excluded from a scanning operation (i.e., because that file has already been scanned with the current malware definitions since last being modified).

As described in the File Attribute Information Application, modifications to files can be detected, and the corresponding file attribute information can be updated accordingly. Applications that process files (e.g., an anti-malware scanning engine) can update the file attribute information as appropriate, to indicate that a given file related activity has occurred (e.g., a file was scanned, with which set of virus definitions, etc.). This provides performance improvements to anti-malware (and other) technologies.

As described in the File Attribute Information Application, a file attribute information database can be maintained locally on the computing device containing the file system. The file attribute information database can be used to track the state of the file attribute information for each file in the file system. As file attribute information is modified and reset as described in the File Attribute Information Application, the file attribute information database can be updated accordingly.

A virtual hard disk is a file format containing the complete contents and structure representing a physical hard disk. A virtual hard disk is typically accessed by a virtual machine, which in turn resides on a physical computer, known in this context as a host. A virtual hard disk can be used to store the operating system of the virtual machine, along with an associated file system. A virtual hard disk is typically stored as a single file residing on the host.

The technology of the File Attribute Information Application is very useful, but as described therein, it is not extended to virtual hard disks and the virtualization environments that interact with them. (In this context, a virtualization environment comprises a specific virtual machine and any additional associated virtualization software, such as software to manage communication between the virtual machine and the host.) This is especially important, as virtual hard disks are increasingly being accessed from outside of corresponding virtual machines. For example, the next version of Microsoft Windows®, Win7, will natively support virtual hard disks as containers to be browsed and manipulated like any other set of folders. As the File Attribute Information Application does not describe utilizing file attribute information to provide the associated performance improvements to virtual hard disks across accesses from both inside and outside of a virtualization environment, it would be desirable to address these issues.

### Summary

File attribute information is shared between processes running on a virtual machine and processes accessing a virtual hard disk from a host level, such that the performance improvements provided by the File Attribute Information Application are extended to file systems on virtual hard disks. When a process running on a host accesses files on a virtual hard disk, that host level process updates the relevant file attribute information, and stores the updated file attribute information on the virtual hard disk. When a process running on the virtual machine subsequently accesses files on the virtual hard disk, the virtual machine level process can read the updated file attribute information, and omit unnecessary operations accordingly. Conversely, when a process running on the virtual machine accesses files on the virtual hard disk and updates the corresponding file attribute information, that process communicates the updated file attribute information to the host, through a trusted channel. When a process running on the host subsequently accesses files on the virtual hard disk, the host level process can read the updated file attribute information, and omit unnecessary operations.

The features and advantages described in this summary and in the following detailed description are not all-inclusive, and particularly, many additional features and advantages will be apparent to one of ordinary skill in the relevant art in view of the drawings, specification, and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

### Brief Description of the Drawings

Figure 1 is a block diagram illustrating a system for extending secure management of file attribute information to virtual hard disks, according to some embodiments of the present invention.

Figure 2 is a flowchart illustrating steps for extending secure management of file attribute information to virtual hard disks, according to one embodiment of the present invention.

Figure 3 is a flowchart illustrating steps for extending secure management of file attribute information to virtual hard disks, according to another embodiment of the present invention.

The Figures depict embodiments of the present invention for purposes of illustration only. One skilled in the art will readily recognize from the following discussion that alternative embodiments of the structures and methods illustrated herein may be employed without departing from the principles of the invention described herein.

### Detailed Description

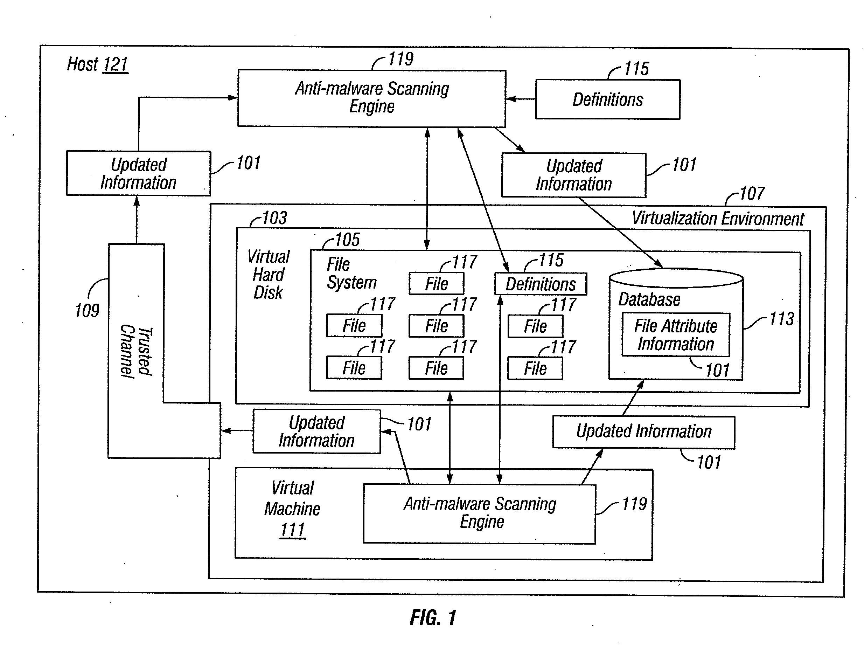

Figure 1 illustrates a system for maintaining file attribute information 101 for file systems 105 on virtual hard disks 103, coordinated for accesses from both inside and outside of a virtualization environment 107, according to some embodiments of the present invention. It is to be understood that although various components are illustrated in Figure 1 as separate entities, each illustrated component represents a collection of functionalities which can be implemented as software, hardware, firmware or any combination of these. Where a component is implemented as software, it can be implemented as a standalone program, but can also be implemented in other ways, for example as part of a larger program, as a plurality of separate programs, as a kernel loadable module, as one or more device drivers or as one or more statically or dynamically linked libraries.

As noted above, a virtual hard disk 103 represents a hard disk for use by a virtualization environment 107. The virtual hard disk 103 stores a file system 105, which can be thought of as the file system 105 of an associated virtual machine 111. When the virtual machine 111 runs, it accesses and manipulates the file system 105 on the virtual hard disk 103 in a manner analogous to that in which a file system 105 on a physical hard disk is accessed and manipulated when a physical computing device runs. According to the present invention, the methodology of the File Attribute Information Application is used to create and maintain a file attribute information database 113 (or other suitable storage mechanism) on the virtual hard disk 103, thereby maintaining file attribute information 101 for the files 117 of the file system 105 thereon.

For example, suppose that an anti-malware scanning engine 119 running on the virtual machine 111 scans the files 117 of the file system 105 on the virtual hard disk 103. In such a scenario, the anti-malware scanning engine 119 could update the file attribute information database 113 on the virtual hard disk 103, to reflect that the files 117 where scanned for malware with a particular set of malware definitions 115. Thus, the next time the virtual hard disk 103 is scanned for malware, the anti-malware scanning engine 119 can check the file attribute information database 113, and avoid rescanning any files 117 thereon that have already been scanned with the current malware definitions 115. It is to be understood that the scanning of the virtual hard disk 103 for malware is simply an example of a type of activity in which file attribute information 101 can be utilized.

As noted above, it is becoming more common for a virtual hard disk 103 to be accessed not only from within an associated virtualization environment 107, but also from the "outside," i.e., by a process running at a host 121 level as opposed to a process running on the virtual machine 111. For example, an anti-malware scanning engine 119 running on the host 121 might scan a virtual hard disk 103 that is being used as a host 121 level backup, or as a container under Win7. It is to be understood that a host 121 level process can access a virtual hard disk 103 that is not mounted as a volume of the host 121 operating system (e.g., one that is quickly scanned by a host 121 level anti-malware scanning engine 119 without going through the standard operating system mounting procedure). A host 121 level process can also access a virtual hard disk 103 that is mounted as a standard operating system volume (e.g., a virtual hard disk 103 in the form of a Win7 container). Both of these scenarios are within the scope of embodiments of the present invention.

When a host 121 level process (e.g., the anti-malware engine 119 running on the host 121 as illustrated) executes an operation on a virtual hard disk 103 that updates the file attribute information 101 concerning the files 117 thereon (e.g., scans the virtual hard disk 103 for malicious code), it is desirable that the updates to the file attribute information 101 be detectable by the virtualization environment 107. Otherwise, the current state of the file attribute information 101 concerning the files 117 on the virtual hard disk 103 would not be accessible to the virtualization environment 107 itself.

As illustrated in Figure 1, when a host 121 level process (e.g., the anti-malware scanning engine 119) updates the file attribute information 101 concerning the files on the virtual hard disk 103 (e.g., when scanning the virtual hard disk 103), the host 121 level process updates the file attribute information database 113 on the virtual hard disk 103. That way, when the virtual hard disk 103 is accessed from within the virtualization environment 107, the relevant process within the virtualization environment 107 has access to the current state of the file attribute information 101. Thus, for example, if the host 121 level anti-malware scanning engine 119 scans a virtual hard disk 103 with current malware definitions 115 from the "outside," the virtual machine 111 could subsequently avoid unnecessarily rescanning unmodified files 117 on the virtual hard disk 103 from the "inside" with the same malware definitions 115. It is to be understood that the above-described functionality can be executed on both those virtual hard disks 103 that are mounted as standard host 121 level operating system volumes and those that are not.

Additionally, a host 121 level process accessing a virtual hard disk 103 can detect if a version of a given data set (e.g., malware definitions 115) on the virtual hard disk 103 is current. For example, a host 121 level anti-malware scanning engine 119, by accessing the file attribute information database 113 on the virtual hard disk 103, can determine which version of malware definitions 115 was most recently used to scan the virtual hard disk 103 from within the virtualization environment 107. If the host 121 level anti-malware scanning engine 119 determines the version of the malware definitions 115 on the virtual hard disk 103 is not current, it can copy the current malware definitions 115 to the virtual hard disk 103 (or set a flag or the like on the virtual hard disk 103 to direct the virtual machine 111 to do so). This functionality can also be executed on both those virtual hard disks 103 that are mounted as standard host 121 level operating system volumes and those that are not.

It is also desirable to synchronize file attribute information 101 in the other direction, i.e., between the virtualization environment 107 and the host 121. For this reason, when the file attribute information database 113 on the virtual hard disk 103 is updated based on an action that occurs in the virtualization environment 107, the corresponding updated file attribute information 101 can be communicated from within the virtualization environment 107 to the host 121, via a trusted channel 109. The host 121 can store this information as desired, for example in a file attributes information database 113 corresponding to the virtual hard disk 103, but stored at a host 121 level. This way, when the virtual hard disk 103 is accessed from the host 121, the accessing process has the current file attribute information 101. It is to be understood that the implementation mechanics of communicating data from a virtualization environment 107 to a host 121 through a trusted channel 109 are known to those of ordinary skill in the relevant art, and the use thereof within the context of the present invention will be readily apparent to those of such a skill level in light of the present specification.

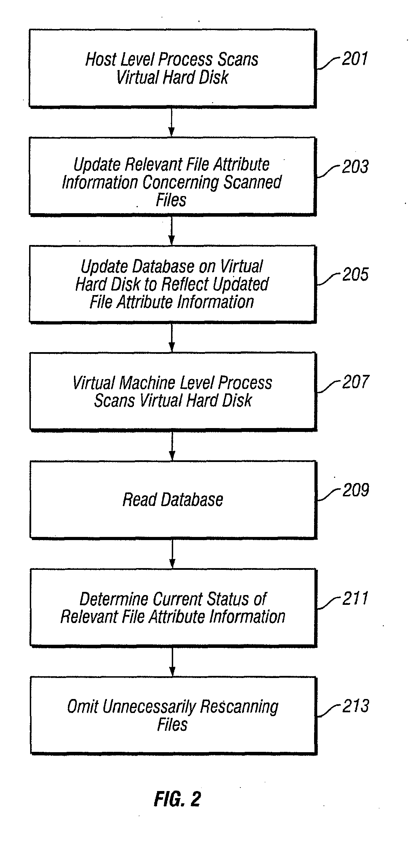

Figure 2 illustrates steps for an example application of an embodiment of the present invention, in which a host 121 (Figure 1) level anti-malware scanning engine 119 (Figure 1) scans 201 a virtual hard disk 103 (Figure 1) that is being used as a host 121 (Figure 1) level container. As the anti-malware engine 119 (Figure 1) scans 201 the files 117 (Figure 1) on virtual hard disk 103 (Figure 1) for malicious code, the anti-malware engine 119 (Figure 1) updates 203 the relevant file attribute information 101 (Figure 1) concerning the scanned files 117 (Figure 1). So that the updates to the file attribute information 101 (Figure 1) are detectable by the virtualization environment 107 (Figure 1), the anti-malware scanning engine 119 (Figure 1) updates 205 the file attribute information database 113 (Figure 1) on the virtual hard disk 103 (Figure 1), to reflect the updated file attribute information 101 (Figure 1). Subsequently, an anti-malware engine 119 (Figure 1) running on the virtual machine 111 (Figure 1) performs a scan 207 of the virtual hard disk 103 (Figure 1). In so doing, the virtual machine 111 (Figure 1) level anti-malware engine 119 (Figure 1) reads 209 the file attribute information database 113 (Figure 1), to determine 211 the current status of the relevant file attribute information 101 (Figure 1). This way, the virtual machine 111 (Figure 1) level anti-malware engine 119 (Figure 1) omits 213 unnecessarily rescanning unmodified files 117 (Figure 1) on the virtual hard disk 103 (Figure 1) with the same malware definitions 115.

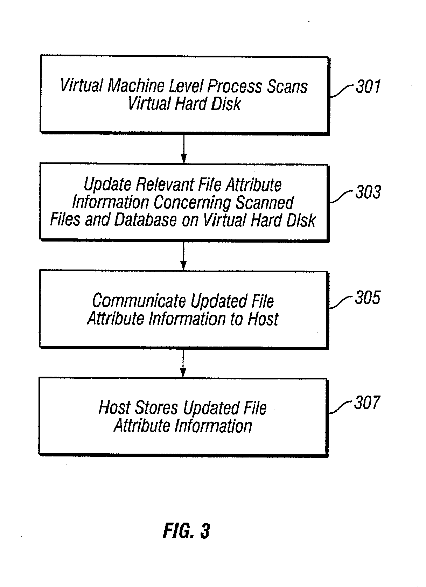

Figure 3 illustrates steps for an example application of an embodiment of the present invention, in which a virtual machine 111 (Figure 1) level anti-malware scanning engine 119 (Figure 1) scans 301 a virtual hard disk 103 (Figure 1) from within the virtualization environment 107 (Figure 1). As the anti-malware scanning engine 119 (Figure 1) running on the virtual machine 111 (Figure 1) scans 301 the files 117 (Figure 1) on the virtual hard disk 103 (Figure 1), the anti-malware scanning engine 119 (Figure 1) updates 303 the appropriate file attribute information 101 (Figure 1) and the file attribute information database 113 (Figure 1) on the virtual hard disk 103 (Figure 1). The anti-malware scanning engine 119 (Figure 1) communicates 305 the updated file attribute information 101 (Figure 1) from within the virtualization environment 107 (Figure 1) to the host 121 (Figure 1), via a trusted channel 109 (Figure 1). The host 121 (Figure 1) stores 307 the received file attribute information 101 (Figure 1), so that when the virtual hard disk 103 (Figure 1) is accessed from the host 121 (Figure 1), the accessing process has the current file attribute information 101 (Figure 1).

As will be understood by those familiar with the art, the invention may be embodied in other specific forms without departing from the spirit or essential characteristics thereof. Likewise, the particular naming and division of the portions, modules, agents, managers, components, functions, procedures, actions, layers, features, attributes, methodologies, data structures and other aspects are not mandatory or significant, and the mechanisms that implement the invention or its features may have different names, divisions and/or formats. Furthermore, as will be apparent to one of ordinary skill in the relevant art, the portions, modules, agents, managers, components, functions, procedures, actions, layers, features, attributes, methodologies, data structures and other aspects of the invention can be implemented as software, hardware, firmware or any combination of the three. Wherever a component of the present invention is implemented as software, the component can be implemented as a script, as a standalone program, as part of a larger program, as a plurality of separate scripts and/or programs, as a statically or dynamically linked library, as a kernel loadable module, as a device driver, and/or in every and any other way known now or in the future to those of skill in the art of computer programming. Additionally, the present invention is in no way limited to implementation in any specific programming language, or for any specific operating system or environment. Furthermore, it will be readily apparent to those of ordinary skill in the relevant art that where the present invention is implemented in whole or in part in software, the software components thereof can be stored on computer readable storage media as computer program products. Any form of tangible computer readable storage medium can be used in this context, such as magnetic or optical storage media. As used herein, the term "computer readable storage medium" does not mean an electrical signal separate from an underlying physical medium. Additionally, software portions of the present invention can be instantiated (for example as object code or executable images) within the memory of any computing device. As used herein, the terms "computer" and "computing device" mean one or more computers configured and/or programmed to execute the described functionality. Accordingly, the disclosure of the present invention is intended to be illustrative, but not limiting, of the scope of the invention, which is set forth in the following claims.

## Claims

1. A computer implemented method for securely managing file attribute information concerning files in a file system on a virtual hard disk, the method comprising the steps of:
performing at least one action on at least one file in a file system on the virtual hard disk, from outside of a virtualization environment, by a computer, said at least one action affecting file attribute information concerning the at least one file;
updating file attribute information concerning the at least one file, from outside of the virtualization environment, by a computer; and
storing the updated file attribute information concerning the at least one file on the virtual hard disk, from outside of the virtualization environment, by a computer, such that the updated file attribute information is accessible from inside of the virtualization environment.

2. The method of claim 1 further comprising:
subsequently accessing the updated file attribute information concerning the at least one file, from inside of the virtualization environment, by a computer.

3. The method of claim 2 further comprising:
determining, based on the updated file attribute information concerning the at least one file, to omit performing at least action concerning at least one file on the virtual hard disk, from inside of the virtualization environment, by a computer.

4. The method of claim 1 wherein:
executing a step from outside of the virtualization environment further comprises executing a step by a process running on a computer at a host level; and
executing a step from inside of the virtualization environment further comprises executing a step by a process running on a computer at a virtual machine level.

5. The method of claim 1 further comprising:
detecting that a dataset on the virtual hard disk is not current, from outside of the virtualization environment, by a computer; and
responsive to detecting that the dataset on the virtual hard disk is not current, executing at least one additional step to update the dataset, from outside of the virtualization environment, by a computer.

6. The method of claim 5 wherein executing at least one additional step to update the dataset on the virtual hard disk further comprises performing a step from a group of steps consisting of:
updating the dataset on the virtual hard disk, from outside of the virtualization environment, by a computer; and
from outside of the virtualization environment, setting an indicator on the virtual hard disk to update the dataset on the virtual hard disk from inside of the virtualization environment, by a computer.

7. The method of claim 5 wherein data on the virtual hard disk further comprises:
a set of malware definitions.

8. The method of claim 1 wherein performing at least one action on at least one file in a file system on the virtual hard disk further comprises:
scanning at least one file in a file system on the virtual hard disk for malicious code.

9. A computer implemented method for securely managing file attribute information concerning files in a file system on a virtual hard disk, the method comprising the steps of:
performing at least one action on at least one file in a file system on the virtual hard disk, from inside of a virtualization environment, by a computer, said at least one action affecting file attribute information concerning the at least one file;
updating file attribute information concerning the at least one file, from inside of the virtualization environment, by a computer; and
from inside of the virtualization environment, communicating the updated file attribute information concerning the at least one file on the virtual hard disk to outside of the virtualization environment through a trusted channel, by a computer.

10. The method of claim 9 further comprising:
subsequently accessing the updated file attribute information concerning the at least one file, from outside of the virtualization environment, by a computer.

11. The method of claim 10 further comprising:
determining, based on the updated file attribute information concerning the at least one file, to omit performing at least action concerning at least one file on the virtual hard disk, from outside of the virtualization environment, by a computer.

12. The method of claim 9 wherein:
executing a step from outside of the virtualization environment further comprises executing a step by a process running on a computer at a host level; and
executing a step from inside of the virtualization environment further comprises executing a step by a process running on a computer at a virtual machine level.

13. The method of claim 9 wherein performing at least one action on at least one file in a file system on the virtual hard disk further comprises:
scanning at least one file in a file system on the virtual hard disk for malicious code.

14. At least one computer readable storage medium containing a computer program product for securely managing file attribute information concerning files in a file system on a virtual hard disk, the computer program product comprising:
program code for performing at least one action on at least one file in a file system on the virtual hard disk, from outside of a virtualization environment, by a computer, said at least one action affecting file attribute information concerning the at least one file;
program code for updating file attribute information concerning the at least one file, from outside of the virtualization environment, by a computer; and
program code for storing the updated file attribute information concerning the at least one file on the virtual hard disk, from outside of the virtualization environment, by a computer, such that the updated file attribute information is accessible from inside of the virtualization environment.

15. The computer program product of claim 14 further comprising:
program code for subsequently accessing the updated file attribute information concerning the at least one file, from inside of the virtualization environment, by a computer.

16. The computer program product of claim 15 further comprising:
program code for determining, based on the updated file attribute information concerning the at least one file, to omit performing at least action concerning at least one file on the virtual hard disk, from inside of the virtualization environment, by a computer.

17. The computer program product of claim 14 wherein:
the program code for executing a step from outside of the virtualization environment further comprises program code for executing a step by a process running on a computer at a host level; and
the program code for executing a step from inside of the virtualization environment further comprises program code for executing a step by a process running on a computer at a virtual machine level.

18. The computer program product of claim 14 further comprising:
program code for detecting that a dataset on the virtual hard disk is not current, from outside of the virtualization environment, by a computer; and
program code for responsive to detecting that the dataset on the virtual hard disk is not current, executing at least one additional step to update the dataset, from outside of the virtualization environment, by a computer.

19. The computer program product of claim 18 wherein the program code for executing at least one additional step to update the dataset on the virtual hard disk further comprises program code for performing a step from a group of steps consisting of:
updating the dataset on the virtual hard disk, from outside of the virtualization environment, by a computer; and
from outside of the virtualization environment, setting an indicator on the virtual hard disk to update the dataset on the virtual hard disk from inside of the virtualization environment, by a computer.

20. The computer program product of claim 14 wherein the program code for performing at least one action on at least one file in a file system on the virtual hard disk further comprises:
program code for scanning at least one file in a file system on the virtual hard disk for malicious code.

21. At least one computer readable storage medium containing a computer program product for securely managing file attribute information concerning files in a file system on a virtual hard disk, the computer program product comprising:
program code for performing at least one action on at least one file in a file system on the virtual hard disk, from inside of a virtualization environment, by a computer, said at least one action affecting file attribute information concerning the at least one file;
program code for updating file attribute information concerning the at least one file, from inside of the virtualization environment, by a computer; and
program code for, from inside of the virtualization environment, communicating the updated file attribute information concerning the at least one file on the virtual hard disk to outside of the virtualization environment through a trusted channel, by a computer.

22. The computer program product of claim 21 further comprising:
program code for subsequently accessing the updated file attribute information concerning the at least one file, from outside of the virtualization environment, by a computer.

23. The computer program product of claim 22 further comprising:
program code for determining, based on the updated file attribute information concerning the at least one file, to omit performing at least action concerning at least one file on the virtual hard disk, from outside of the virtualization environment, by a computer.

24. The computer program product of claim 21 wherein:
the program code for executing a step from outside of the virtualization environment further comprises program code for executing a step by a process running on a computer at a host level; and
the program code for executing a step from inside of the virtualization environment further comprises program code for executing a step by a process running on a computer at a virtual machine level.

25. The computer program product of claim 21 wherein the program code for performing at least one action on at least one file in a file system on the virtual hard disk further comprises:
program code for scanning at least one file in a file system on the virtual hard disk for malicious code.
